(19) Europäisches Patentamt

European Patent Office

Office européen des brevets

(11) **EP 0 676 304 B1**

(12) **FASCICULE DE BREVET EUROPEEN**

(45) Date de publication et mention
de la délivrance du brevet:
**10.06.1998 Bulletin 1998/24**

(51) Int. Cl.6: **B60C 9/09**, B60C 9/02,
B60C 9/12

(21) Numéro de dépôt: **95104035.1**

(22) Date de dépôt: **20.03.1995**

(54) **Pneumatique avec flancs renforcés**

Luftreifen mit verstärkten Flanken

Tyre having reinforced sidewalls

(84) Etats contractants désignés:
**DE ES FR GB IT LU**

(30) Priorité: **11.04.1994 FR 9404353**

(43) Date de publication de la demande:
**11.10.1995 Bulletin 1995/41**

(73) Titulaire:
**COMPAGNIE GENERALE DES
ETABLISSEMENTS
MICHELIN - MICHELIN & CIE
63040 Clermont-Ferrand Cédex (FR)**

(72) Inventeurs:
• **Delias, Alain
F-63170 Perignat les Sarlieves (FR)**
• **Doremieux, François
Stanford, CA 94305-7140 (US)**

(74) Mandataire: **Devaux, Edmond-Yves
Michelin & Cie,
Service SGD/LG/PI Ladoux
63040 Clermont-Ferrand Cedex 01 (FR)**

(56) Documents cités:
EP-A- 0 017 258          EP-A- 0 465 187
FR-A- 1 323 300          FR-A- 1 339 206
US-A- 3 844 327          US-A- 5 078 192

## Description

La présente invention concerne le domaine des pneumatiques et en particulier celui des pneumatiques comportant des flancs renforcés.

En règle générale, un pneumatique est composé de plusieurs parties assurant chacune un rôle précis dans le fonctionnement dudit pneumatique, à savoir un sommet situé radialement vers l'extérieur, c'est à dire radialement vers les plus grands rayons du pneumatique, et le plus souvent renforcé par une armature de ceinture et comportant une bande de roulement, ledit sommet étant prolongé radialement vers l'intérieur, c'est à dire radialement vers les plus petits rayons, par deux flancs eux-mêmes prolongés radialement vers l'intérieur par des bourrelets.

Le rôle des flancs est de transmettre des efforts entre le sommet et les bourrelets du pneumatique. Pour cela, lesdits flancs comportent au moins une armature de carcasse qui peut se prolonger dans le sommet du pneumatique et qui est par ailleurs fermement ancrée dans les bourrelets par des moyens appropriés.

L' armature de carcasse est composée de renforts liés entre eux par une matière élastomérique et le plus souvent, mais non exclusivement, réalisée sous la forme de nappe.

L'expression "fermement ancrée dans les bourrelets" signifie que lesdits bourrelets sont conçus de façon à reprendre en totalité les efforts qui se développent dans l'armature de carcasse sous l'effet de la pression de gonflage et sous l'effet du roulage du pneumatique.

Dans le présent document, le terme "assemblage" désigne tout renfort constitué par la réunion de plusieurs éléments de rigidité très supérieure à la rigidité moyenne des mélanges d'élastomères employés dans l'industrie du pneumatique, comme par exemple des fils ou des filaments ou des torons, quel qu'en soit le matériau.

Pour améliorer les performances de comportement à haute vitesse d'un pneumatique et réduire autant que faire se peut les amplitudes des vibrations des flancs et aussi pour pouvoir transmettre un couple important de la roue au sol par l'intermédiaire dudit pneumatique, il est souhaitable d'augmenter la rigidité circonférentielle des flancs et dans le même temps d'ajuster au mieux cette rigidité en fonction de la position radiale considérée dans ledit flanc.

Il existe plusieurs brevets décrivant la mise en place d' assemblages dans le sens circonférentiel dans les flancs d'un pneumatique. Outre le fait que ces brevets se sont surtout attachés à résoudre des problèmes de fabrication dans le cas de l'emploi de renforts circonférentiels continus, il n'est pas fait mention dans ceux-ci de l'intérêt de réaliser une variation appropriée de la rigidité circonférentielle en fonction de la position radiale dans les flancs.

En particulier, le brevet français 1 304 907 décrit un procédé de fabrication d'un pneumatique dont chacun des flancs est renforcé par un renfort disposé suivant la direction circonférentielle. Ledit procédé consiste, dans un premier temps, à réaliser sur une forme adaptée une couronne composée par l'enroulement en spirale d'un renfort unique maintenu en place par un matériau élastomérique, et dans un deuxième temps, à venir placer cette couronne sur l'ébauche conformée d'un pneumatique pour former l'un des flancs dudit pneumatique.

Un tel procédé, s'il permet effectivement de fabriquer des pneumatiques avec des renforts circonférentiels comme, par exemple des assemblages, reste très coûteux dans sa mise en oeuvre et d'autre part il ne permet pas de réaliser aisément un ajustement approprié de la rigidité circonférentielle en fonction de la position radiale dans le flanc.

Une autre façon de faire est décrite dans le brevet français 2 170 848. Ce brevet décrit, dans le cas d'un procédé de fabrication comportant une étape de conformation, la possibilité de fabriquer des pneumatiques dont les flancs sont renforcés dans la direction circonférentielle par des assemblages continus dits "assemblages à âme cassante" : lesdits assemblages comportent un fil d'âme rectiligne autour duquel est enroulé hélicoïdalement l'assemblage de renforcement proprement dit. Cet assemblage est posé par enroulement circonférentiel sur l' armature de carcasse elle-même disposée sur un tambour de confection avant conformation. Au cours de la conformation de la carcasse, chaque assemblage à âme cassante va devoir adopter un développement d'autant plus important que le taux de conformation est grand. Cela est possible grâce à la structure de l' assemblage de renfort : en effet, après une première phase pendant laquelle seule l'âme dudit assemblage s'oppose à la déformation, celle-ci casse dès que la force de rupture de ladite âme est atteinte laissant alors l'assemblage libre de s'allonger quasiment sans effort.

Pour rappel, le taux de conformation d'un produit rentrant dans la composition d'un pneumatique est le rapport entre le rayon du cylindre de pose de ce produit en fabrication et la valeur du rayon dudit produit après la conformation.

Toutefois dans cet exemple, seuls les éléments de renfort disposés dans les flancs vers les plus grands rayons auront repris une forme quasi-allongée, c'est-à-dire avec un pas d'hélicoïde quasi-infini. Par conséquent; l'effet de renfort à la traction n'est maximal que sur les assemblages situés le plus à l'extérieur radialement. Il est ici encore impossible par ce moyen d'ajuster la rigidité circonférentielle des renforts flanc en fonction de la position radiale dans ledit flanc.

Un pneumatique ayant les caractéristiques du préambule de la revendication 1 est décrit dans le document US-A-5078192.

L'objet de la présente invention est de proposer un pneumatique comportant deux flancs prolongés radialement vers l'extérieur par un sommet comportant une bande de roulement, et radialement vers l'intérieur par des bourrelets, les flancs comportant au moins une armature de carcasse et au moins l'un desdits flancs comportant des renforts orientés circonférentiellement et couplés mécaniquement à ladite armature de carcasse, caractérisé en ce que lesdits renforts de flanc sont composés de groupements comportant un ou plusieurs tronçons d'assemblages, lesdits tronçons ayant une longueur inférieure au 1/10$^e$ de la circonférence mesurée au point du sommet le plus à l'extérieur radialement, chaque groupement étant couplé, au voisinage de chacune de ses deux extrémités, avec au moins un autre groupement voisin.

Pour définir la notion de groupements voisins d'un groupement donné, il est nécessaire de définir un diamètre équivalent dudit groupement comme étant le diamètre de la section d'un tore de section circulaire circonscrit audit groupement et dont l'axe de symétrie est confondu avec l'axe de rotation du pneumatique. On considère qu'un groupement est voisin d'un groupement donné dès lors qu'existe un chevauchement entre lesdits groupements et dès lors que la distance séparant les génératrices les plus proches desdits groupements est au plus égale au diamètre équivalent du groupement donné. Il y a chevauchement entre deux groupements s'ils existe au moins un plan de coupe radial commun aux deux groupements et s'il n'y a pas d'autre groupement intercalé entre eux.

Le terme "groupement de tronçons d'assemblages" désigne un ensemble formé par la juxtaposition de plusieurs tronçons sensiblement de même longueur, lesdits tronçons étant disposés parallèlement les uns aux autres et juxtaposés sur quasiment toute leur longueur. La longueur d'un groupement est sensiblement égale à la longueur des tronçons le composant. De façon préférentielle, un tronçon d'assemblage aura une longueur inférieure à la circonférence moyenne du tore circonscrit au groupement auquel appartient ledit tronçon. La circonférence moyenne dudit tore est égal au périmètre du cercle passant par tous les centres des sections dudit tore.

Dans un groupement les tronçons d'assemblages peuvent être formés d'assemblages identiques ou de nature différente et peuvent être situés dans un même plan ou bien dans des plans différents; lesdits tronçons sont maintenus ensemble par un matériau élastomérique. A la limite, un groupement peut ne contenir qu'un seul tronçon.

Dans un même pneumatique, il est bien sûr possible d'employer des groupements de longueurs différentes.

On dit que deux groupements sont couplés dès lors qu'il existe un chevauchement entre eux et qu'il existe une liaison mécanique entre lesdits groupements permettant la transmission d'un effort de traction d'un groupement à l'autre par cisaillement de ladite liaison.

Selon un autre aspect de l'invention, il est souhaitable que chaque groupement de tronçons d'assemblages destiné à renforcer l'un des flancs d'un pneumatique soit couplé, à chacune de ses deux extrémités, avec des groupements voisins sur une longueur totale de couplage au moins égale à 20% de la longueur dudit groupement.

Pour que se développent des efforts de tension dans les tronçons d'assemblage, il est préférable que la longueur de chaque tronçon d'assemblage soit supérieure au 1/50$^e$ de la circonférence moyenne du tore circonscrit au groupement auquel appartient ledit tronçon.

La transmission d'un effort de tension d'un groupement à d'autres groupements voisins est possible dès lors que la somme des longueurs de couplage entre ledit groupement et les groupements voisins est au moins égale à 20% de la longueur dudit groupement.

Il est possible de définir, pour chaque position radiale dans le flanc, une rigidité équivalente en extension d'une bande circonférentielle comprenant les groupements de renforts disposés circonférentiellement à ladite position et les groupements voisins, par exemple, en effectuant par un calcul de structure une extension circonférentielle uniforme et prédéterminée de ladite bande. La rigidité équivalente est alors égale au rapport entre l'effort calculé et l'extension imposée.

L'invention réside dans la mise en oeuvre de moyens permettant de renforcer circonférentiellement les flancs d'un pneumatique tout en ajustant au mieux la rigidité équivalente d'extension circonférentielle desdits flancs. Par exemple, une augmentation de la rigidité équivalente est possible en augmentant la longueur des groupements et/ou en augmentant la longueur de couplage de chaque groupement. De cette façon, il est possible de retarder l'apparition de déformations dans les flancs quand la vitesse d'utilisation du pneumatique augmente, sans pour autant altérer l'aptitude des flancs à fléchir sous l'action des charges supportées.

L'invention sera parfaitement comprise en se reportant aux dessins annexés qui représentent deux exemples de réalisation.

La figure 1 représente une demi-coupe radiale d'un pneumatique selon l'invention, pour véhicule tourisme, de dimension 235/45 ZR 17,

La figure 2 est une vue de face, perpendiculaire à la figure 1, représentant des groupements de tronçons d'assemblage du renfort du flanc,

La figure 3 représente une demi-coupe radiale d'un pneumatique selon l'invention, pour moto, de dimension 18/67 R 17,

La figure 4 est une vue du couplage entre plusieurs groupements de tronçons d'assemblage, utilisés comme renfort flanc.

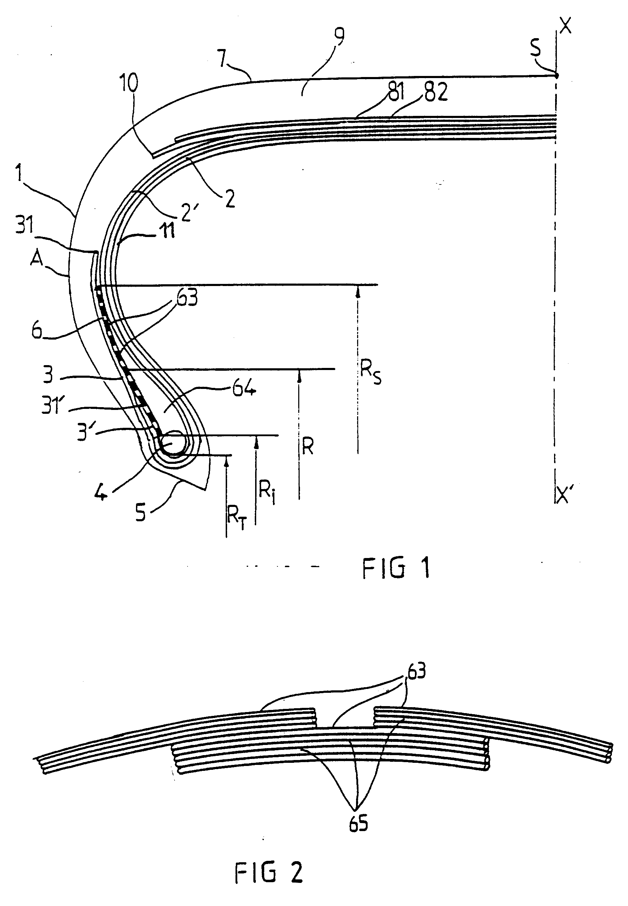

Seule une demi-coupe radiale d'un pneumatique pour véhicule tourisme de dimension 235/45 ZR 17 est représentée schématiquement sur la figure 1 comptetenu de la symétrie de ladite coupe par rapport à l'axe XX'.

Ce pneumatique est formé d'un sommet 7 comportant radialement à l'extérieur une bande de roulement 9, de deux flancs 1 et de deux bourrelets 5 dont la fonction est d'assurer la liaison mécanique avec la roue d'utilisation.

Ce pneumatique comprend deux armatures de carcasse 2 et 2', chacune desdites armatures étant renforcée par des assemblages en rayonne de 244*2 tex de masse linéique et orientés radialement; l'armature 2' est, dans le sommet, radialement à l'extérieur de l'armature 2. Lesdites armatures de carcasse 2 et 2' sont retournées autour de tringle 4 de bourrelet pour former deux retournements 3 et 3' dont les extrémités 31 et 31' sont situées respectivement radialement au delà du point A du flanc situé le plus à l'extérieur axialement et radialement à l'intérieur dudit point A. Le sommet 7 comporte une ceinture de sommet formée par l'empilement de deux nappes 81, 82, chacune de ces nappes étant renforcée par des assemblages métalliques faisant un angle faible par rapport à la direction circonférentielle.

Une gomme étanche 11 à l'air et sur laquelle agit directement la pression de gonflage du pneumatique a pour rôle de réaliser l'étanchéité du pneumatique.

Le développement mesuré, sur le pneumatique monté sur sa jante d'utilisation et gonflé à sa pression nominale, au point S sur la bande de roulement 9 le plus à l'extérieur radialement est égal à 2021mm.

Le flanc 1 du pneumatique, compris entre l'extrémité 10 de la nappe 82 la plus large axialement et le bourrelet 5, comporte des renforts 6 disposés dans la direction circonférentielle c'est-à-dire faisant un angle de 90° avec la direction des assemblages des armatures de carcasse 2 et 2'; dans le cas présent et comme représenté sur la figure 2, lesdits renforts sont composés de groupements 63 d'au moins quatre tronçons 65 d'assemblage de longueur 80mm et disposés de façon concentrique les uns aux autres. Les assemblages utilisés sont des assemblages de rayonne de 244*2 tex de masse linéique.

Dans l'exemple décrit, il a été trouvé avantageux que la rigidité équivalente d'extension circonférentielle des flancs suive une loi de variation de la forme :

$$K R^{\alpha} = C_0 \, ,$$

où K est la rigidité équivalente d'extension circonférentielle au niveau des renforts situés à un rayon R mesuré par rapport à l'axe de rotation du pneumatique, $\alpha$ un nombre réel et $C_0$ est une constante choisie en fonction de la dimension du pneumatique. Plus précisemment le rayon R correspond au rayon moyen du tore circonscrit aux tronçons d'assemblage considérés.

Dans l'exemple décrit, après avoir posé les deux armatures de carcasse sur un tambour de fabrication, on enroule des nappes de mélange d'élastomère, sur les régions desdites armatures correspondant aux flancs du pneumatique, et par dessus lesdites nappes de mélange, on enroule une nappe de renfort comportant des assemblages orientés circonférentiellement et dans laquelle lesdits assemblages ont été coupés pour former des groupements de tronçons d'assemblages de longueur moyenne 80 mm. En procédant ensuite à la conformation desdites armatures de carcasse renforcées dans les régions des flancs, les groupements vont pouvoir se déplacer les uns par rapport aux autres par cisaillement du mélange de calandrage présent entre lesdits groupements et ainsi il est possible d'obtenir ladite loi de variation de la rigidité équivalente d'extension circonférentielle avec $\alpha$ égal à 1.

Dans ce cas, les groupements situés les plus à l'extérieur radialement (c'est à dire ceux les plus éloignés de l'axe de rotation du pneumatique) vont se déplacer de façon plus importante par rapport à leurs voisins, mais sans toutefois présenter, entre deux groupements voisins, de longueur de recouvrement inférieure à 30mm sur le pneumatique fabriqué.

Dans le pneumatique décrit, les renforts circonférentiels 6 sont positionnés entre un cercle de rayon Rs= 247mm et un cercle de rayon Ri= 280mm dans le bourrelet 5. Le rayon Rs correspond sensiblement à la distance radiale du point A du flanc le plus à l'extérieur axialement alors que le rayon Ri est compris entre le rayon de l'extrémité 31' du retournement 3' de l'armature de carcasse 2' et le rayon $R_t$ de la tringle 4 du bourrelet 5 mesuré au point de ladite tringle le plus à l'intérieur radialement. Les rayons Rs, Ri sont mesurés par rapport à l'axe de rotation du pneumatique; il en est de même pour le rayon R d'un cercle centré sur l'axe de rotation du pneumatique et passant par un point quelconque du flanc.

Le couplage mécanique entre les renforts 6 et les armatures de carcasse 2 et 2' est réalisé par un profilé de mélange d'élastomère 64 pour les renforts les plus proches de la tringle 4 et par les mélanges de calandrage pour les renforts les plus proches du point A.

Notons que dans certains cas, dont celui décrit ici, l'emploi de ce type de renfort peut offrir l'avantage de ne pas avoir à utiliser une ou plusieurs nappes de renfort supplémentaires dans le bourrelet, habituellement composées d'assemblages inclinés par rapport à la direction circonférentielle, et ayant pour rôle de réduire les mouvements circonférentiels du bourrelet du pneumatique le long du rebord de la jante de montage dudit pneumatique.

La demanderesse a d'ailleurs procédé à un essai comparatif entre des pneumatiques réalisés selon l'invention et des pneumatiques comportant, dans les flancs, des assemblages métalliques faisant un angle non nul par rapport à la direction circonférentielle. L'essai consiste à faire rouler un pneumatique sur un volant, ledit pneumatique gonflé étant soumis à une charge fixée, et à augmenter progressivement la vitesse de rotation dudit volant jusqu'à éclatement dudit pneumatique. Il a été constaté que le pneumatique réalisé selon l'invention permettait, à performance identique dans ce test, un allègement du pneumatique de l'ordre de 5% par rapport au pneumatique habituel.

Outre l'intérêt de l'invention dans le domaine des performances de comportement à haute vitesse, il a été constaté qu'un pneumatique conforme à ladite invention présentait aussi une amélioration sensible de ces performances d'endurance au roulage sous des conditions de pression de gonflage faible voire nulle.

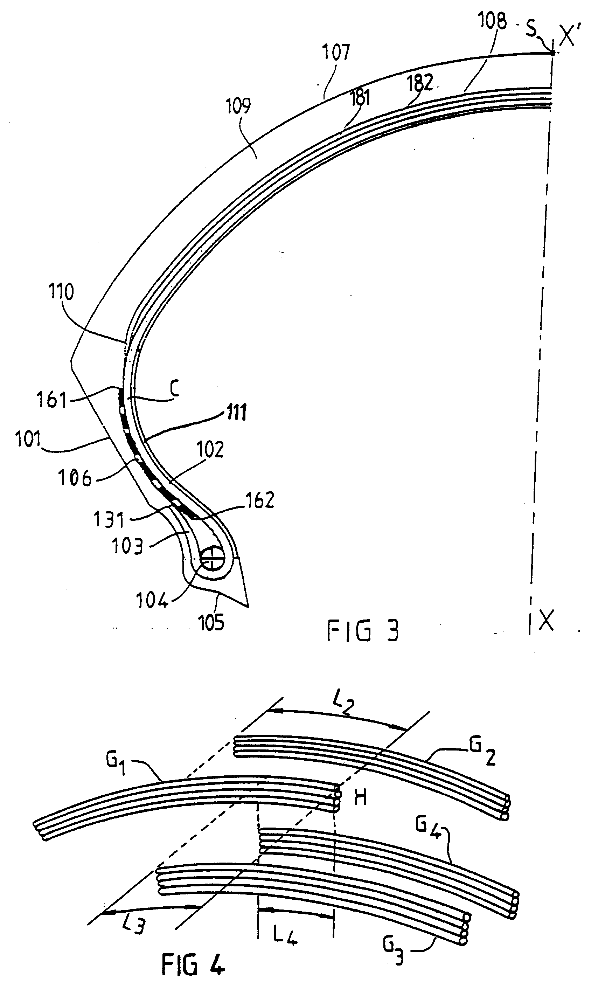

Une autre application de l'invention est illustrée par le pneumatique moto de dimension 18/67 R 17 dont une demi-coupe méridienne est représentée sur la figure 3. La coupe complète est obtenue par symétrie de la demi-coupe représentée par rapport à l'axe XX'.

Dans le cas d'un pneumatique pour véhicule deux roues, il a été trouvé particulièrement avantageux du point de vue des performances à vitesse élevées, de renforcer les flancs dudit pneumatique par des groupements de tronçons d'assemblages, lesdits tronçons étant de longueur inférieure au 1/15$^e$ de la circonférence mesurée au point du sommet le plus à l'extérieur radialement et en ce que chaque groupement est couplé, au voisinage de chacune de ses deux extrémités, sur au moins 35% de sa longueur avec des groupements voisins.

Le pneumatique conforme à l'invention est formé par un sommet 107, deux flancs 101 et deux bourrelets 105. Le sommet 107 comporte une ceinture 108 renforcée par deux nappes 181, 182, surmontée radialement vers l'extérieur par une bande de roulement 109. L'extrémité radialement vers l'extérieur du flanc correspond à l'extrémité 110 de la nappe 181 la plus à l'extérieur radialement et la plus large axialement. Une gomme étanche 111 est disposée sur l'intérieur du pneumatique. Le développement de ce pneumatique mesuré au point S de la bande de roulement le plus à l'extérieur radialement est de 2010mm.

Une armature de carcasse 102 composée d'assemblages nylon disposés radialement est ancrée dans le bourrelet 105 par enroulement autour de la tringle 104 et forme ainsi un retournement 103 dont l'extrémité 131 est située radialement à l'intérieur par rapport au point C du profil de l'armature de carcasse 102 le plus à l'extérieur axialement.

Une nappe de renfort 106, composée de groupements de quatre tronçons d'assemblage de rayonne de 368 tex de masse linéique orientés circonférentiellement, est couplée à l'armature de carcasse de façon à être située en grande partie axialement à l'extérieur de ladite armature. Vu en coupe sur la figure 3, cette nappe 106 s'étend entre les points 162 et 161 situés respectivement à une distance d'environ 185mm et 221mm de l'axe de rotation du pneumatique. L'extrémité 162 de la nappe de renfort 106 est située sur un cercle de rayon inférieur au rayon du cercle passant par l'extrémité 131 du retournement 103 de l'armature de carcasse 102. L'extrémité 161 est située sur un cercle de rayon inférieur au rayon du cercle passant par l'extrémité 110 de la nappe de ceinture la plus large axialement. Les groupements ont une longueur d'environ 75mm et sont disposés, dans le pneumatique, de façon à avoir à chacune de leurs extrémités des longueurs de couplage au moins égales à 30mm. Le couplage mécanique entre l'armature de carcasse 102 et la nappe de renfort 106 est réalisé par les mélanges de calandrage respectifs de ladite armature 102 et de ladite nappe 106.

La figure 4 représente, de manière schématique, un exemple de couplage pouvant exister entre un groupement de tronçons d'assemblage $G_1$ et ses groupements voisins $G_2$, $G_3$, $G_4$. Dans la configuration représentée et choisie à titre d'exemple uniquement, les groupements $G_1$, $G_2$, $G_3$ sont situés sur une même couronne cylindrique alors que le groupement $G_4$ n'est pas situé sur ladite couronne mais est situé dans un plan perpendiculaire à l'axe de rotation et contenant aussi le groupement $G_1$. Le groupement $G_1$ est couplé à son extrémité H avec les trois groupements $G_2$, $G_3$, $G_4$ : cela signifie qu'il existe un chevauchement entre chacun des trois groupements $G_2$, $G_3$, $G_4$ et le groupement $G_1$ sur des longueurs respectivement $L_2$, $L_3$, $L_4$ et que la liaison mécanique entre ces groupements se fait par l'intermédiaire de mélange d'élastomère. D'autre part, pour assurer une reprise efficace des efforts de tension dans le groupement $G_1$ par les groupements $G_2$, $G_3$, $G_4$ il est souhaitable que la somme des longueurs $L_2$, $L_3$, $L_4$ soit au moins égale à 20% de la longueur du groupement $G_1$. Ainsi, il est possible d'éviter l'apparition de contraintes locales de cisaillement trop élevées et donc pénalisantes vis-à-vis de l'endurance du pneumatique.

Les exemples décrits dans présent document ne doivent en aucune façon être considérés comme limitant l'application de l'invention à des fabrications de pneumatiques sur des moyens de fabrication comportant une étape de conformation. Le pneumatique selon l'invention peut être réalisé entièrement par des opérations de bobinage de groupements de tronçons d'assemblage sur un support imposant la forme intérieure du pneumatique et donc sans conformation.

## Revendications

1. Pneumatique comportant deux flancs (1) prolongés radialement vers l'extérieur, par un sommet (7) comportant une bande de roulement (9), et radialement vers l'intérieur par des bourrelets (5), chaque flanc (1) comportant au moins une armature de carcasse (2) et au moins l'un desdits flancs comportant des renforts (6) orientés circonférentiellement et couplés mécaniquement à ladite armature de carcasse (2), lesdits renforts (6) de flanc (1) sont composés de groupements (63) comportant un ou plusieurs tronçons (65) d'assemblages, caractérisé en ce que lesdits tronçons (65) ayant une longueur inférieure au 1/10$^e$ de la circonférence mesurée au point du sommet (7) le plus à l'extérieur radialement, chaque groupement (63) étant couplé, au voisinage de chacune de ses deux extrémités, avec au moins un autre groupement (63) de tronçons.

2. Pneumatique selon la revendication 1, caractérisé en ce que chaque groupement de tronçons du renfort flanc (1) est couplé, à chacune de ses deux extrémités, avec des groupements voisins, sur une longueur totale de couplage au moins égale à 20% de la longueur dudit groupement.

3. Pneumatique selon la revendication 2, caractérisé en ce que la longueur totale de couplage, à chaque extrémité d'un groupement (63) de tronçons (65) du renfort flanc (1), est obtenue en faisant la somme des longueurs individuelles de couplage de ce groupement avec chacun des groupements voisins.

4. Pneumatique pour véhicule deux roues selon l'une des revendications 1 à 3, caractérisé en ce que les renforts (6) de flanc (1) sont composés de groupements (63) de tronçons (65) d'assemblages, lesdits tronçons (65) étant de longueur inférieure au $1/15^e$ de la circonférence mesurée au point du sommet (7) le plus à l'extérieur radialement et en ce que chaque groupement (63) est couplé, au voisinage de chacune de ses deux extrémités, sur au moins 35% de sa longueur avec les groupements voisins.

5. Pneumatique selon l'une des revendications 1 à 4, caractérisé en ce que l'armature de carcasse (2) est disposée radialement.

6. Pneumatique selon l'une des revendications 1 à 5, caractérisé en ce que la rigidité moyenne d'extension circonférentielle des flancs (1) suit une loi de variation de la forme :

$$K R^{\alpha} = C_0,$$

où K est la rigidité équivalente d'extension circonférentielle au niveau des renforts situés à un rayon R mesuré par rapport à l'axe de rotation du pneumatique, $\alpha$ un nombre réel et $C_0$ est une constante choisie en fonction de la dimension du pneumatique.

7. Pneumatique selon l'une des revendications 1 à 6, caractérisé en ce que la longueur de chaque tronçon (65) est inférieure à la circonférence moyenne du tore circonscrit au groupement auquel appartient ledit tronçon (65).

8. Pneumatique selon l'une des revendications 1 à 7, caractérisé en ce que la longueur de chaque tronçon (65) est supérieure au $1/50^e$ de la circonférence moyenne du tore circonscrit au groupement auquel appartient ledit tronçon (65).

9. Pneumatique selon l'une des revendications 1 à 8, caractérisé en ce que les renforts (6) de flanc (1) sont disposés à partir d'un point radialement vers l'intérieur de l'épaule du pneumatique et jusque dans le bourrelet (5) dudit pneumatique.

**Claims**

1. A tyre having two sidewalls (1) extended radially towards the outside by a crown (7) having a tread (9) and radially towards the inside by beads (5), each sidewall (1) having at least one carcass reinforcement (2) and at least one of said sidewalls having circumferentially oriented reinforcements (6) which are coupled mechanically to said carcass reinforcement (2), said sidewall (1) reinforcements (6) being formed of groups (63) comprising one or more sections (65) of assemblies, characterised in that said sections (65) have a length less than 1/10th of the circumference, measured at the point of the crown (7) furthest radially to the outside, each group (63) being coupled, in the vicinity of each of its two ends, to at least one other group (63) of sections.

2. A tyre according to Claim 1, characterised in that each group of sections of the sidewall reinforcement (1) is coupled, at each of its two ends, to neighbouring groups over a total length of coupling at least equal to 20% of the length of said group.

3. A tyre according to Claim 2, characterised in that the total coupling length at each end of a group (63) of sections (65) of the sidewall reinforcement (1) is obtained by forming the sum of the individual coupling lengths of this group to each of the neighbouring groups.

4. A tyre for a two-wheel vehicle according to one of Claims 1 to 3, characterised in that the sidewall (1) reinforcements (6) are formed of groups (63) of assembly sections (65), said sections (65) being of a length less than 1/15th of the circumference measured at the point of the crown (7) furthest radially to the outside, and in that each group (63) is coupled, in the vicinity of each of its two ends, over at least 35% of its length to the neighbouring groups.

5. A tyre according to one of Claims 1 to 4, characterised in that the carcass reinforcement (12) is arranged radially.

6. A tyre according to one of Claims 1 to 5, characterised in that the average rigidity of circumferential extension of the sidewalls (1) follows a law of variation of the form:

$$K\,R^{\alpha} = C_0,$$

in which K is the equivalent rigidity of circumferential extension at the level of the reinforcements located at a radius R measured with respect to the axis of rotation of the tyre, $\alpha$ is a real number, and $C_0$ is a constant selected as a function of the size of the tyre.

7. A tyre according to one of Claims 1 to 6, characterised in that the length of each section (65) is less than the average circumference of the torus circumscribed on the group to which said section (65) belongs.

8. A tyre according to one of Claims 1 to 7, characterised in that the length of each section (65) is greater than 1/50th of the average circumference of the torus circumscribed on the group to which said section (65) belongs.

9. A tyre according to one of Claims 1 to 8, characterised in that the sidewall (1) reinforcements (6) are arranged starting from a point radially towards the inside of the shoulder of the tyre and in to the bead (5) of said tyre.

**Patentansprüche**

1. Reifen mit zwei Flanken (1), die radial nach außen durch einen Scheitel (7) verlängert sind, der eine Lauffläche (9) aufweist, und radial nach innen durch Wülste (5), wobei jede Flanke (1) mindestens einen Karkassenmantel (2) aufweist und mindestens eine der genannten Flanken Verstärkungen (6) aufweist, die in Umfangsrichtung ausgerichtet und mechanisch mit dem genannten Karkassenmantel (2) gekoppelt sind, wobei die genannten Verstärkungen (6) der Flanke (1) aus Gruppierungen (63) Zusammengesetzt sind, die ein oder mehrere Verßindungsstücke (65) aufweisen,
**dadurch gekennzeichnet, daß**
die genannten Stücke (65) eine Länge aufweisen, die kleiner ist als 1/10 des Umfangs, gemessen am Punkt des Scheitels (7), der radial am weitesten außen liegt, und daß jede Gruppierung (63) in der Nähe einer jeden ihrer beiden Enden mit mindestens einer anderen Gruppierung (63) von Stücken gekoppelt ist.

2. Reifen nach Anspruch 1, dadurch gekennzeichnet, daß, jede Gruppierung von Stücken der Verstärkung der Flanke (1) an jedem ihrer beiden Enden mit benachbarten Gruppierungen über eine gesamte Koppelungslänge gekoppelt ist, die mindestens gleich 20 % der Länge der genannten Gruppierung beträgt.

3. Reifen nach Anspruch 2, dadurch gekennzeichnet, daß die gesamte Koppelungslänge an jedem Ende einer Gruppierung (63) aus Stücken (65) der Verstärkung der Flanke (1) dadurch erhalten wird, daß man die Summe der einzelnen Koppelungslängen dieser Gruppierung mit jeder der Nachbargruppierungen bildet.

4. Reifen für ein Zweiradfahrzeug nach einem der Ansprüche 1 bis 3, dadurch gekennzeichnet, daß die Verstärkungen (6) der Flanke (1) aus Gruppierungen (63) von Verbindungsstücken (65) zusammengesetzt sind, wobei die genannten Stücke (65) eine Länge aufweisen, die kleiner ist als 1/15 des Umfangs, gemessen am Punkt des Scheitels (7), der radial am weitesten außen liegt, und daß jede Gruppierung (63) in der Nähe eines jeden ihrer beiden Enden über mindestens 35 % ihrer Länge mit benachbarten Gruppierungen gekoppelt ist.

5. Reifen nach einem der Ansprüche 1 bis 4, dadurch gekennzeichnet, daß der Karkassenmantel (2) radial ausgebildet ist.

6. Reifen nach einem der Ansprüche 1 bis 5, dadurch gekennzeichnet, daß die mittlere Steifigkeit der Umfangserstreckung der Flanken (1) einem Variationsgesetz der folgenden Form genügt:

$$K\,R^{\alpha} = C_0,$$

wobei K die äquivalente Steifigkeit der Umfangserstreckung auf Höhe der Verstärkungen ist, die auf einem Radius R sitzen, der in Bezug zur Drehachse des Reifens gemessen ist, $\alpha$ eine reelle Zahl ist und $C_0$ eine Konstante ist, die in Funktion der Abmessung des Reifens gewählt ist.

7. Reifen nach einem der Ansprüche 1 bis 6, dadurch gekennzeichnet, daß die Länge eines jeden Stükkes (65) kleiner ist als der mittlere Umfang des Torus, der der Gruppierung umschrieben ist, zu welcher das genannte Stück (65) gehört.

8. Reifen nach einem der Ansprüche 1 bis 7, dadurch gekennzeichnet, daß die Länge eines jeden Stükkes (65) größer ist als 1/50 des mittleren Umfangs des Torus, der der Gruppierung umschrieben ist, zu welcher das genannte Stück (65) gehört.

9. Reifen nach einem der Ansprüche 1 bis 8, dadurch gekennzeichnet, daß die Verstärkungen (6) der Flanke (1) so angeordnet sind, daß sie von einem Punkt radial zur Innenseite der Schulter des Reifens ausgehen und bis in den Wulst (5) des genannten Reifens reichen.

FIG 1

FIG 2

FIG 3

FIG 4